Europäisches Patentamt

European Patent Office

Office européen des brevets

(19)

(11) Numéro de publication: **0 251 850**
**A1**

(12)

# DEMANDE DE BREVET EUROPEEN

(21) Numéro de dépôt: **87401312.1**

(22) Date de dépôt: **11.06.87**

(51) Int. Cl.⁴: **B 60 G 11/08**

(30) Priorité: **16.06.86 FR 8608639**

(43) Date de publication de la demande:
**07.01.88 Bulletin 88/01**

(84) Etats contractants désignés:
**AT BE CH DE ES FR GB GR IT LI LU NL SE**

(71) Demandeur: **BERTIN & CIE**
**Zone industrielle Boîte postale 3**
**F-78373 Plaisir Cédex (FR)**

(72) Inventeur: **de Goncourt, Louis**
**6, rue Nungesser**
**Voisins-le-Bretonneux F-78190 Trappes (FR)**

**Sayers, Kenneth Herbert**
**16 rue de la Sablière**
**F-78120 Rambouillet (FR)**

(74) Mandataire: **Colas, Jean-Pierre et al**
**Cabinet de Boisse 37, avenue Franklin D. Roosevelt**
**F-75008 Paris (FR)**

(54) **Ensemble suspension de véhicule.**

(57) Ensemble suspension constitué d'une structure porteuse (7, 8, 10) susceptible d'être fixée au châssis (9) d'un véhicule.

La structure maintient la lame ressort (1) en composite aux extrémités de laquelle sont fixés les supports de roue (15, 16). Les supports sont reliés à la structure par les triangles (13, 14) et les amortisseurs (27, 28).

Différentes positions de la lame ressort des triangles et des amortisseurs sont décrites.

FIG.:1

EP 0 251 850 A1

Bundesdruckerei Berlin

## Description

### Ensemble suspension de véhicule

L'invention concerne un ensemble suspension de véhicule à lame ressort transversale en composite comportant une lame ressort en composite présentant vers ses extrémités un profil évolutif d'épaisseur croissante et de largeur décroissante, un support de roue relié d'une part à la lame ressort et d'autre part au châssis par un triangle, un élément amortisseur étant prévu entre le support de roue et la caisse pour l'amortissement des amplitudes.

On connaît, par exemple, du brevet français 2.516.455 une suspension automobile à lame ressort en composite. Cette lame est disposée transversalement sous le châssis d'un véhicule auquel elle est maintenue par des éléments de liaison, symétriquement par rapport à l'axe du véhicule. Par suite des caractéristiques particulières de la lame, obtenues tant par sa forme que par son mode de réalisation, il a été possible de supprimer les ressorts hélicoïdaux du dispositif amortisseur assurant le rappel vertical du véhicule à sa position statique et d'alléger les triangles reliant le support de roue au châssis, qui transmettent les efforts de freinage et assurent le positionnement géométrique de l'axe de la roue. Le dispositif amortisseur est réduit à une jambe de force, assurant le guidage vertical de l'axe de la roue et l'amortissement d'amplitude.

La forme que prennent les lames en composite en position de travail est sensiblement différente de celle qu'elles ont lorsqu'elles ne subissent aucune contrainte. Les lames sont plus ou moins fortement courbées dans leur plan de symétrie longitudinale et leur montage sur un train avant ou arrière de voiture nécessite leur redressement afin de pouvoir les fixer dans les dispositifs de liaison au châssis et aux supports de roue. Des outillages permettant l'application à la lame d'une précontrainte en vue de son redressement sont connus et sont utilisés pour la mise en place ou le démontage des lames sur les éléments de suspension déjà montés sur le véhicule.

L'emplacement des trains et la précontrainte qui doit être appliquée au ressort hélicoïdal ou à la lame ressort ne permettent pas une amélioration des temps de montage sur les chaînes de fabrication ou lors des travaux de réparation ou d'entretien.

L'invention a pour objet un ensemble suspension comportant une structure porteuse, susceptible d'être fixée sur le châssis, qui maintient la lame ressort aux extrémités de laquelle sont fixés les supports de roue, lesdits supports étant eux-mêmes reliés à ladite structure par des triangles et des amortisseurs.

La structure porteuse est constituée de deux montures, reliées au moins provisoirement par une poutre, dans lesquelles sont maintenues la lame ressort, les triangles et les amortisseurs.

Les explications et figures données ci-après à titre d'exemples permettront de comprendre comment l'invention peut être réalisée.

La figure 1 est une vue de face d'un premier exemple de réalisation d'une suspension selon l'invention.

La figure 2 est une vue de dessous de la figure 1 dans laquelle on a supprimé, sur la partie droite du dessin, le triangle et l'amortisseur pour montrer la fixation de la lame.

La figure 3 est une vue de face d'un deuxième exemple de réalisation d'une suspension selon l'invention.

Les figures 4, 4A; 5, 5A; 6, 6A montrent trois exemples de disposition des amortisseurs par rapport à la lame et aux triangles.

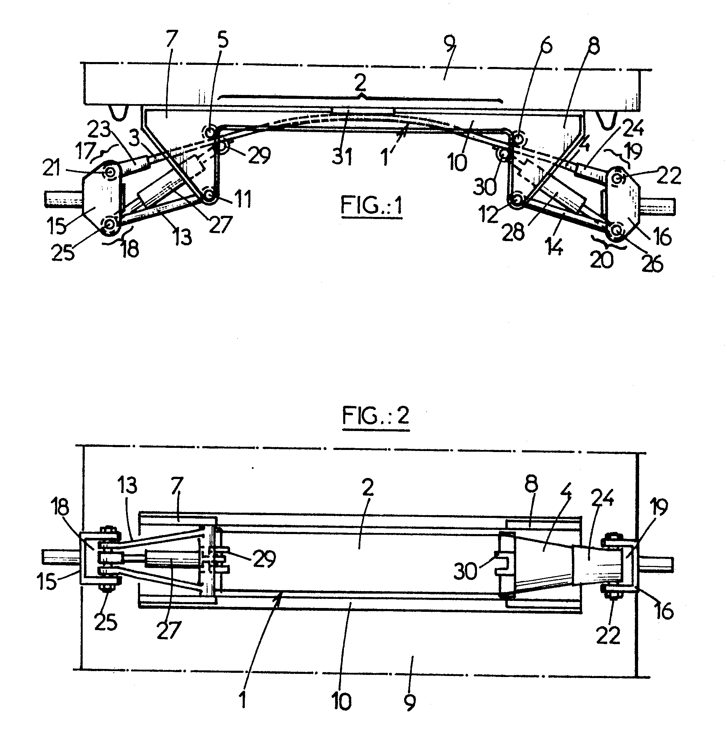

Les figures 1 et 2 représentent, vues respectivement de face et de dessous, un train d'un véhicule automobile à lame ressort 1 en composite. Cette lame présente, comme connu, une partie centrale 2, de section rectangulaire de relativement faible épaisseur et grande largeur, raccordée à ses extrémités à des parties 3, 4 à profil évolutif d'épaisseur croissante et de largeur décroissante. Cette lame est maintenue dans des dispositifs de liaison 5, 6 prévus dans les montures 7, 8 constituant la structure porteuse fixée au châssis 9 du véhicule.

Selon la forme de réalisation représentée, les montures 7, 8 se présentent sous la forme d'une pièce en U à faces latérales triangulaires. Ces montures sont fixées ou sont partie intégrante d'un bâti formé d'une poutre 10 assurant leur positionnement et supportant les efforts de précontrainte appliqués à la lame.

Selon une forme de réalisation non représentée, le bâti est constitué de deux poutres fixées de façon amovible sur les faces latérales des montures de façon à pouvoir être retirées après fixation desdites montures sur le châssis.

Les montures portent en outre des paliers dans lesquels viennent se loger les axes 11, 12 autour desquels tourne la base des triangles 13, 14.

Les supports de roue 15, 16 sont maintenus aux extrémités de la lame ressort et au sommet des triangles. Ces supports présentent chacun deux chapes 17, 18 et 19, 20 dans lesquelles sont prévus des paliers d'axes parallèles. Les paliers de l'une des chapes 17, 19 reçoivent des axes 21, 22 qui coopèrent avec les ferrures 23, 24 prévues aux extrémités de la lame ressort, ceux de l'autre chape 18, 20 reçoivent un axe 25, 26 coopérant avec le sommet des triangles 13, 14 et éventuellement avec la tige d'un amortisseur 27, 28 dont le corps est articulé dans des moyens de maintien 29, 30 formés par une chape prévue sur les montures 7, 8.

L'exemple de réalisation de la figure 1 est plus particulièrement destiné au train avant d'un véhicule et présente par conséquent des fusées à axe horizontal. En outre, la lame ressort est disposée au-dessus des triangles et se trouve protégée des projections par son éloignement de la surface de roulement.

Dans le cas de montures intégrées à une poutre en U, les ailes du U permettent un coffrage au moins partiel de la lame. Eventuellement une butée 31 est prévue sur la partie centrale du fond de la poutre 10.

La réalisation précédente, à lame ressort supérieure, peut être utilisée également pour un train arrière et est particulièrement intéressante dans le cas où l'on désire disposer d'une place suffisante pour, par exemple, ranger une roue de secours.

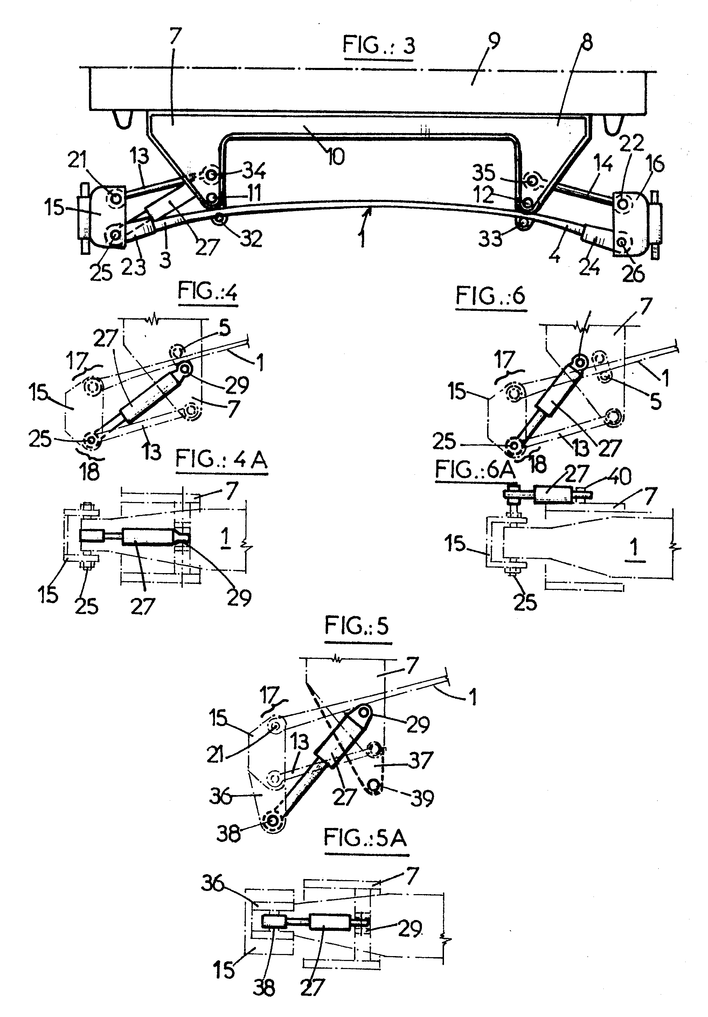

Dans l'exemple de réalisation représenté figure 3, les éléments semblables à ceux décrits dans l'exemple précédent portent les mêmes références. Les différences portent principalement sur les positions relatives des triangles et de la lame ressort. La lame ressort occupe maintenant la position inférieure et les dispositifs de liaison de la lame aux montures se trouvent à l'extrémité inférieure des montures en 32, 33, les fixations des bases des triangles 13, 14 étant reportées en 34, 35, approximativement à l'emplacement des dispositifs de liaison de la lame de l'exemple précédent.

On a également représenté sur cet exemple des supports de roue à fusées verticales telles que celles que l'on trouve sur certains trains avant de véhicules utilitaires et camions.

Les amortisseurs 27 , 28 sont disposés dans cet exemple de réalisation, approximativement entre les extrémités des ferrures 23, 24 de la lame ressort 1 et l'axe 34, 35 autour duquel pivotent les bases des triangles 13, 14.

Cette même disposition des amortisseurs peut être adoptée dans l'exemple des figures 1 et 2 et inversement la disposition des amortisseurs selon l'exemple de la figure 3 peut être adoptée pour les figures 1 et 2.

Les amortisseurs se trouvent dans le plan de symétrie verticale de l'ensemble suspension comme représenté dans les figures 4, 4A. Ils sont donc maintenus à une de leur extrémité par l'un des axes maintenant le triangle 13, 14 et à l'autre extrémité par un axe maintenu dans une chape fixée soit sur les montures 7, 8, soit maintenue par l'axe de ferrures 23, 24 de la lame ressort 1.

Selon l'exemple de disposition représentée figures 5, 5A, et ne présentant qu'un côté de suspension, l'autre côté étant identique, on prévoit un prolongement 36 (ou 37 représenté en trait interrompu) de la partie inférieure du support de roue 15 (ou de la monture 7) portant un axe 38 (ou 39), dans lequel est monté une extrémité de l'amortisseur 27, l'autre extrémité étant maintenue dans une chape 29 prévue sur la monture 7 (ou sur l'axe 21 de la chape 17 du support de roue 15).

L'exemple des figures 6, 6A représente une réalisation dans laquelle les amortisseurs 27 sont disposés dans un plan parallèle au plan de symétrie de l'ensemble suspension et extérieurement audit ensemble.

Cette disposition peut être employée dans l'exemple des figures 5, 5A avec le prolongement inférieur 36 ou 37 du support de roue ou de la monture.

Une extrémité de l'amortisseur 27 est montée sur un prolongement extérieur de l'axe 25, tandis que l'autre extrémité de l'amortisseur pivote sur un axe 40 formant un moyen de maintien porté par une des faces latérales de la monture 7.

Les différents exemples précédemment décrits permettent une adaptation de la suspension aux différents problèmes qui peuvent se présenter selon les types de véhicule que l'on désire équiper.

La position supérieure ou inférieure de la lame ressort peut être choisie en fonction des impératifs d'encombrement par exemple d'une roue de secours (lame supérieure) ou d'un carter moteur (lame inférieure). Il en est de même pour la position des amortisseurs dans le plan parallèlement au plan de symétrie de la suspension.

## Revendications

1. Ensemble suspension de véhicule à lame ressort transversale en composite, comportant une lame ressort en composite, présentant vers ses extrémités un profil évolutif d'épaisseur croissante et de largeur décroissante, un support de roue relié d'une part à la lame ressort et d'autre part au châssis par un triangle, un élément amortisseur étant prévu entre le support de roue et un élément fixe pour l'amortissement des amplitudes, caractérisé en ce qu'il est constitué d'une structure porteuse (7, 8, 10), susceptible d'être fixée sur le châssis (9) du véhicule, ladite structure maintenant la lame ressort (1) aux extrémités de laquelle sont fixés les supports de roue (15, 16), lesdits supports étant reliés à ladite structure par les triangles (13, 14) et les amortisseurs (27, 28).

2. Ensemble suspension selon la revendication 1, caractérisé en ce que la structure porteuse est constituée de deux montures (7, 8) fixées à un bâti éventuellement amovible.

3. Ensemble suspension selon la revendication 1 ou 2, caractérisé en ce que les montures (7, 8) portent au moins les dispositifs de liaison (5, 6) de la lame ressort (1) et les paliers dans lesquels sont articulées les bases des triangles (13, 14).

4. Ensemble suspension selon la revendication 3, caractérisé en ce que les montures (7, 8) portent les moyens de maintien (29, 30) des amortisseurs (27, 28).

5. Ensemble suspension selon la revendication 3, caractérisé en ce que les dispositifs de liaison (5, 6) de la lame ressort (1) sont prévus près de la base des montures et les paliers du triangle (13, 14) près de l'extrémité des faces triangulaires des montures.

6. Ensemble suspension selon la revendication 3, caractérisé en ce que les dispositifs de liaison (5, 6) de la lame ressort (1) sont prévus près de l'extrémité des faces triangulaires des montures et les paliers du triangle (13, 14) près de la base des montures.

7. Ensemble suspension selon la revendication 1, caractérisé en ce que les amortisseurs (27, 28) sont disposés dans le plan de symétrie de l'ensemble suspension.

8. Ensemble suspension selon la revendication 1, caractérisé en ce que les amortisseurs (27, 28) sont fixés entre un prolongement (36) de l'extrémité inférieure des supports de roue (15, 16) et un moyen de maintien (29, 30) prévu sur les montures (7, 8).

9. Ensemble suspension selon la revendication 1, caractérisé en ce que les amortisseurs (27, 28) sont fixés entre un prolongement (37) de l'extrémité inférieure des montures (7, 8) et une chape (17, 19) des supports de roue (15, 16).

10. Ensemble suspension selon la revendication 1, caractérisé en ce que les amortisseurs (27, 28) sont fixés parallèlement au plan de symétrie de l'ensemble suspension et extérieurement audit ensemble.

0251850

FIG.:1

FIG.:2

0251850

FIG.: 3

FIG.:4

FIG.: 4 A

FIG.:6

FIG.:6A

FIG.:5

FIG.:5A

Office européen
des brevets

**RAPPORT DE RECHERCHE EUROPEENNE**

Numéro de la demande

EP 87 40 1312

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 516 455 (BERTIN) <br> * En entier * | 1 | B 60 G 11/08 |
| A | US-A-3 913 941 (FORD) <br> * En entier * | 1,3,7 | |
| A | US-A-3 379 269 (GENERAL MOTORS) <br> * En entier * | 1,10 | |
| A | US-A-3 147 815 (GENERAL MOTORS) <br> * Figures 1-3 * | 1 | |

DOMAINES TECHNIQUES
RECHERCHES (Int. Cl.4)

B 60 G 11
B 60 G 3
B 60 G 15
B 60 G 21
F 16 F 1

Le présent rapport de recherche a été établi pour toutes les revendications

| Lieu de la recherche | Date d'achèvement de la recherche | Examinateur |
|---|---|---|
| LA HAYE | 21-09-1987 | LINTZ C.H. |